(19) 

Europäisches
Patentamt
European
Patent Office
Office européen
des brevets

(11) **EP 4 656 378 A1**

(12) **EUROPEAN PATENT APPLICATION**
published in accordance with Art. 153(4) EPC

(43) Date of publication:
**03.12.2025  Bulletin 2025/49**

(21) Application number: **24747189.9**

(22) Date of filing: **17.01.2024**

(51) International Patent Classification (IPC):
**B32B 27/00** *(2006.01)*    **B32B 27/16** *(2006.01)*
**B32B 27/30** *(2006.01)*

(52) Cooperative Patent Classification (CPC):
**B32B 27/00; B32B 27/16; B32B 27/30**

(86) International application number:
**PCT/JP2024/001162**

(87) International publication number:
**WO 2024/157859 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **25.01.2023   JP 2023009511**

(71) Applicant: **Toppan Holdings Inc.
Tokyo 110-0016 (JP)**

(72) Inventors:
• **SASAKI, Noriko**
  **Tokyo 110-0016 (JP)**
• **NISHIKAWA, Yohei**
  **Tokyo 110-0016 (JP)**
• **AKUTSU, Erika**
  **Tokyo 110-0016 (JP)**

(74) Representative: **TBK
Bavariaring 4-6
80336 München (DE)**

(54) **DECORATIVE SHEET**

(57)    The disclosure provides a decorative sheet having a low gloss and imparting a smooth feel. There is provided a decorative sheet (1) including a primary film layer (2) and a surface protective layer (5) provided to one side of the primary film layer (2), wherein the surface protective layer (5) has a surface provided with an uneven structure including a plurality of ridge portions each protruding in a ridge-like shape; the uneven structure of the surface protective layer (5) have a protruding peak height Rpk of less than 3.5 $\mu$m; and an absorption spectrum obtained from Fourier infrared spectrometry of the surface protective layer (5) has a ratio $I_{1095}/I_{1725}$ of 0.65 or more, that is a ratio of a maximum value $I_{1095}$ in the wavenumber range of 1085 to 1105 cm$^{-1}$ to a maximum value $I_{1725}$ in the wavenumber range of 1715 to 1735 cm$^{-1}$.

FIG.1

**Description**

[Technical Field]

The present invention relates to decorative sheets.

[Background Art]

Decorative sheets are used, for example, to decorate the surfaces of interior and exterior materials such as fittings, furniture, furnishing materials, and flooring materials, for the purpose of imparting aesthetic properties and durability to these materials. In general, decorative sheets are widely used in the form of decorative panels in which the decorative sheets are attached to the surfaces of substrates such as wood, wood boards, metal plates, non-flammable boards, paper substrates, or resin substrates via an adhesive or the like.

Aesthetic properties are imparted, for example, by forming patterns such as wood grain or stone grain using various printing methods. Decorative sheets having plain colors without patterns are sometimes preferred. The choice of whether patterned or not, or the choice of the type of pattern varies depending on the purposes and preferences.

Gloss of the surfaces is also important for the aesthetic properties of the decorative sheets. There are a variety of decorative sheets to choose from depending on the purposes and preferences, ranging from decorative sheets having mirror-like high gloss to decorative sheets having low gloss with no reflection at all.

As mentioned above, imparting durability is an important function of decorative sheets, in addition to imparting aesthetic properties. Durability relates to a comprehensive evaluation of scratch resistance or contamination resistance, and whether these characteristics can be maintained over a long period of time. Although requirements may vary depending on the environment and circumstances in which the decorative sheets are used, decorative sheets with high performance are always in need.

To impart durability, a surface protective layer is formed, in general, on the outermost surface of decorative sheets. To adjust gloss mentioned above, or to achieve low gloss in particular, it is common to add a matting agent (matting additive) to the surface protective layer.

Furthermore, decorative sheets are preferred to have processability such that they can withstand such processes as cutting or bending which are generally performed when forming decorative materials such as decorative panels.

PTL 1, for example, proposes a decorative sheet taking into consideration of aesthetic properties (low gloss), scratch resistance, and contamination resistance.

[Citation List]

[Patent Literature]

PTL 1: JP2019-119138A

[Summary of the Invention]

The present invention aims to provide a decorative sheet having a low gloss and imparting a smooth feel.

According to an aspect of the present invention, there is provided a decorative sheet including a primary film layer and a surface protective layer provided to one side of the primary film layer, wherein the surface protective layer has a surface provided with an uneven structure including a plurality of ridge portions each protruding in a ridge-like shape; the uneven structure of the surface protective layer has a protruding peak height Rpk of less than 3.5 $\mu$m; and an absorption spectrum obtained from Fourier infrared spectrometry of the surface protective layer has a ratio $I_{1095}/I_{1725}$ of 0.65 or more, that is a ratio of the maximum value $I_{1095}$ in the wavenumber range of 1085 to 1105 cm$^{-1}$ to the maximum value $I_{1725}$ in the wavenumber range of 1715 to 1735 cm$^{-1}$.

According to another aspect of the present invention, there is provided a decorative sheet according to the above aspect, wherein the ratio $I_{1095}/I_{1725}$ is 3.5 or less.

According to still another aspect of the present invention, there is provided the decorative sheet according to any of the above aspects, wherein the protruding peak height Rpk is 0.5 $\mu$m or more.

According to still another aspect of the present invention, there is provided the decorative sheet according to any of the above aspects, wherein in the uneven structure of the surface protective layer, the average length RSm of roughness curve elements is 800 $\mu$m or less.

According to still another aspect of the present invention, there is provided the decorative sheet according to any of the above aspects, wherein in the uneven structure of the surface protective layer, the average length RSm of roughness curve elements is 350 $\mu$m or less.

According to still another aspect of the present invention, there is provided the decorative sheet according to any of the above aspects, wherein the average length RSm is 10 $\mu$m or more.

According to still another aspect of the present invention, there is provided the decorative sheet according to any of the above aspects, wherein the surface protective layer has a thickness of 2 $\mu$m or more and 15 $\mu$m or less.

According to still another aspect of the present invention, there is provided the decorative sheet according to any of the above aspects, wherein the surface protective layer has a thickness of 2 $\mu$m or more and less than 10 $\mu$m.

According to still another aspect of the present invention, there is provided the decorative sheet according to any of the above aspects, wherein the surface protective layer has a gloss of 20.0 or less.

According to still another aspect of the present invention, there is provided the decorative sheet according to any of the above aspects, wherein the surface protective layer has a gloss of less than 10.0.

According to still another aspect of the present invention, there is provided the decorative sheet according to any of the above aspects, wherein at least part of the plurality of ridge portions are adjacent to each other in the width direction, and in an area where the at least part of the ridge portions are adjacent to each other in the width direction, a cross section taken along the direction parallel to the width direction and parallel to the thickness direction of the surface protective layer has a sinusoidal waveform in a portion where the uneven structure is formed.

According to still another aspect of the present invention, there is provided the decorative sheet according to any of the above aspects, wherein the surface protective layer contains a cured product of an ionizing radiation curable resin.

According to still another aspect of the present invention, there is provided the decorative sheet according to the above aspect, wherein the ionizing radiation curable resin comprises an acrylate containing a repeating structure as a main component, the repeating structure being any of an ethylene oxide structure, a propylene oxide structure, and a $\varepsilon$-caprolactone structure, and the number of repeat units of the repeating structure is three or more.

According to still another aspect of the present invention, there is provided the decorative sheet according to the above aspect, wherein the ionizing radiation curable resin contains an acrylate as a main component; and the acrylate comprises a first acrylate containing a repeating structure, the repeating structure being any of an ethylene oxide structure, a propylene oxide structure, and a $\varepsilon$-caprolactone structure, with the number of repeat units of the repeating structure being three or more, and a second acrylate with 1 to 6 functional groups.

According to still another aspect of the present invention, there is provided a decorative material including the decorative sheet according to any one of the above aspects, and a substrate to which the decorative sheet is attached.

According to the present invention, a decorative sheet having a low gloss and imparting a smooth feel can be provided.

[Brief Description of the Drawings]

Fig. 1 is a cross-sectional view illustrating a decorative material including a decorative sheet according to an embodiment of the present invention.

Fig. 2 is a cross-sectional view illustrating a surface protective layer included in the decorative sheet of Fig. 1.

Fig. 3 is a microscopic image of a surface protective layer included in a decorative sheet according to an example of the present invention.

[Description of the Embodiments]

Referring to the drawings, some embodiments of the present invention will be described. The embodiments described below are more specific implementations of any of the aspects set forth above. The matters described below can be incorporated into the aspects set forth above, either alone or in combination.

The embodiments described below are merely examples of the configurations for specifically implementing the technical ideas of the present invention, and the technical ideas of the present invention should not be construed as being limited to the materials, shapes, structures, and the like of the components described below. Various modifications can be made to the technical ideas of the present invention within the technical scope defined by the claims.

It should be noted that components having equivalent or similar functions are designated with like reference signs in the drawings referenced below to omit repeated explanations. The drawings are only schematic, and the relationship between the dimensions in one direction and the dimensions in another direction, the relationship between the dimensions of one member and the dimensions of other members, and the like, may differ from the actual relationships.

<1> Decorative material and decorative sheet

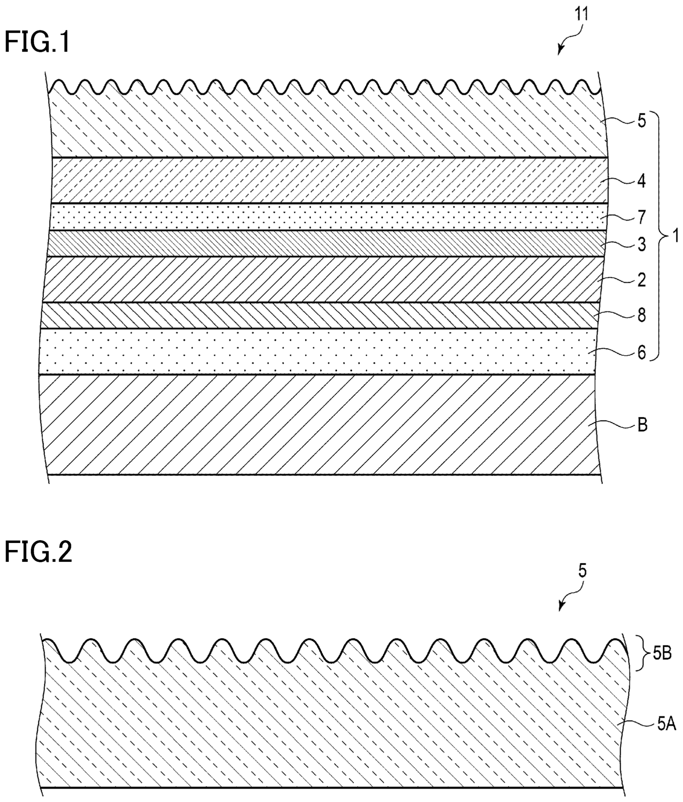

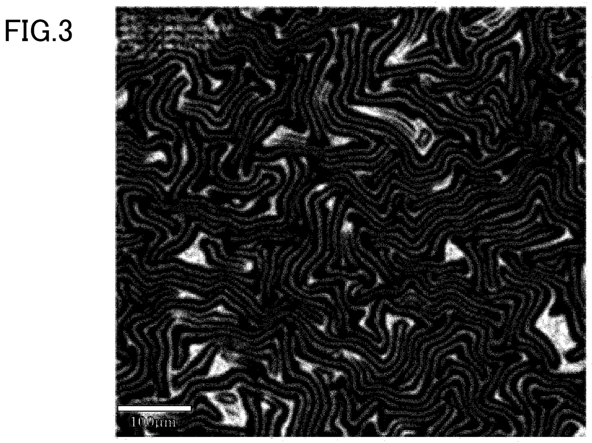

Fig. 1 is a cross-sectional view illustrating a decorative material including a decorative sheet according to an embodiment of the present invention. Fig. 2 is a cross-sectional view illustrating a surface protective layer included in the decorative sheet of Fig. 1. Fig. 3 is a microscopic image of a surface protective layer included in a decorative sheet according to an example of the present invention.

The cross section shown in Fig. 2 is a cross section taken along the thickness direction of the surface protective layer. The microscopic image shown in Fig. 3 is an image in plan view captured using a laser microscope (OLS-4000 manufactured by Olympus Corporation).

A decorative material 11 shown in Fig. 1 includes a substrate B and a decorative sheet 1 attached to the substrate B. The decorative material 11 here is a decorative panel. The decorative panel may be flat, or may be curved or folded. The decorative material 11 may have other shapes.

The substrate B here is a board material. The board material may, for example, be a wood board, inorganic board, metal board, or composite board made of multiple materials The substrate B may have a shape other than a plate.

The decorative sheet 1 includes a primary film layer 2, a pattern layer 3, a transparent resin layer 4, a surface protective layer 5, an adhesive layer 7, a primer layer 6, and a concealing layer 8. The pattern layer 3, the adhesive layer 7, the transparent resin layer 4, and the surface protective layer 5 are provided in this order on the surface of the primary film layer 2 facing away from the surface facing the substrate B. The concealing layer 8 and the primer layer 6 are provided in this order on the surface of the primary film layer 2 facing the substrate B. One or more of the pattern layer 3, the transparent resin layer 4, the primer layer 6, the adhesive layer 7, and the concealing layer 8 may be omitted. The components included in the decorative sheet 1 will be sequentially described below.

<1.1> Primary film layer

The primary film layer 2 or the material thereof may be made of any material selected, for example, from paper, synthetic resins, synthetic resin foam, rubber, non-woven fabric, synthetic paper, metal foil, etc. Examples of the paper include tissue paper, titanium paper, and resin-impregnated paper. Examples of the synthetic resins include polyethylenes, polypropylenes, polybutylenes, polystyrenes, polycarbonates, polyesters, polyamides, ethylene-vinyl acetate copolymers, polyvinyl alcohols, and acrylic resins. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethanes. As the non-woven fabric, organic or inorganic non-woven fabric can be used. Examples of the metal used for the metal foil include aluminum, iron, gold, and silver.

Considering printability, costs, and the like, the primary film layer 2 is preferred to have a thickness of 20 $\mu$m or more and 250 $\mu$m or less.

<1.2> Primer layer

If an olefin resin is used as the primary film layer 2, the surface of the primary film layer 2 may often be in an inactive state. Accordingly, in this case, the primer layer 6 is preferred to be provided between the primary film layer 2 and the substrate B. If the primary film layer 2 is made of an olefin resin, the primer layer 6 may be omitted, and the primary film layer 2 may undergo a surface modification treatment such as corona treatment, plasma treatment, ozone treatment, electron beam treatment, UV treatment, and dichromate treatment, in order to improve adhesion between the primary film layer 2 and the substrate B.

As the materials for the primer layer 6, for example, the materials mentioned later for the pattern layer 3 may be used. Considering that the decorative sheet 1 is taken up in a roll form, the primer layer 6, which is provided to the rear surface of the decorative sheet 1, may additionally contain an inorganic filler to avoid blocking and improve adhesion to the adhesive. Examples of the inorganic filler include silica, alumina, magnesia, titanium oxide, and barium sulfate.

<1.3> Concealing layer

To impart concealment properties to the decorative sheet 1 for the substrate B, a colored sheet may be used as the primary film layer 2, for example, or an opaque concealing layer 8 may be provided. For example, the concealing layer 8 may be made of the same materials as those materials described later for the pattern layer 3. However, since the concealing layer 8 is provided to impart concealment properties, the pigment used is preferred to be an opaque pigment such as titanium oxide or iron oxide. Furthermore, in order to improve concealment properties, the material of the concealing layer 8 can contain metal, such as gold, silver, copper, or aluminum. In general, aluminum flakes may often be added.

### <1.4> Pattern layer

The pattern layer 3 is a layer formed by printing patterns on the primary film layer 2 using ink. As the binder of the ink, nitrocellulose, cellulose, vinyl chloride-vinyl acetate copolymer, polyvinyl butyral, polyurethane, acrylics, polyesters, or modified products thereof, for example, can be used alone or in combination. The binder may be any of aqueous, solvent, and emulsion types, and may be of a one-part type or a two-part type that uses a curing agent. The pattern layer 3 may be formed using a method in which a layer made of a curable ink is cured by irradiation of UV light, electron beams, or the like. The most common method among these is a method in which a urethane ink is cured using an isocyanate. The ink used for forming the pattern layer 3 may further contain, for example, colorants such as pigments and dyes contained in ordinary inks, extender pigments, solvents, and various additives, in addition to these binders. Examples of highly versatile pigments include condensed azo, insoluble azo, quinacridone, isoindoline, anthraquinone, imidazolone, cobalt, phthalocyanine, carbon, titanium oxide, iron oxide, and pearl pigments such as mica.

Separate from applying an ink, various metals can be vapor-deposited or sputtered to provide patterns to the pattern layer 3. In particular, a photostabilizer is preferred to be added to the ink. This can suppress deterioration of the decorative sheet 1 itself caused by photodegradation of the ink, and can extend the life of the decorative sheet 1.

### <1.5> Adhesive layer

The adhesive layer 7 is a layer also referred to as a thermal adhesive layer, anchor coat layer, or dry lamination adhesive layer.

The resin material for the adhesive layer 7 is not specifically limited, but can be appropriately selected, for example, from acrylic resins, polyester resins, polyurethane resins, epoxy resins, etc. As the resin material for the adhesive layer 7, for example, an ethylene-vinyl acetate copolymer resin adhesive can also be used. The coating method can be appropriately selected according to the viscosity or the like of the adhesive. In general, gravure coating is used to form the adhesive layer 7 on the upper surface of the pattern layer 3, and then the transparent resin layer 4 is laminated. If a sufficient adhesive strength is obtained between the transparent resin layer 4 and the pattern layer 3, the adhesive layer 7 may be omitted.

### <1.6> Transparent resin layer

As the resin material for the transparent resin layer 4, an olefin resin is preferred to be used. Examples of the olefin resin include, besides polypropylenes, polyethylenes, polybutenes, and the like, homopolymers of an $\alpha$-olefin or copolymers of one or more $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), and copolymers of ethylene or an $\alpha$-olefin with other monomers, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, and ethylene-butyl acrylate copolymer.

In order to improve the surface strength of the decorative sheet 1, a highly crystalline polypropylene is preferred to be used as the resin for the transparent resin layer 4. As necessary, the transparent resin layer 4 may additionally contain various additives such as a thermal stabilizer, photostabilizer, anti-blocking agent, catalyst scavenger, colorant, light scattering agent, and matting agent. Generally, phenol-, sulfur-, phosphorus-, and hydrazine-based thermal stabilizers, and hindered amine-based photostabilizers are added in any combination.

### <1.7> Surface protective layer

The surface protective layer 5 includes a core portion 5A and a plurality of ridge portions 5B protruding in a ridge-like shape from one side of the core portion 5A. The ridge portions 5B form an uneven structure.

In the decorative sheet 1 according to the present embodiment, the term ridge-like refers to convexities which are linear in plan view. The ridge portions 5B may be curved or linear in plan view, but are preferred to be curved from the perspective of fingerprint resistance of the decorative sheet 1. Each of the ridge portions 5B may or may not be branched in plan view. In the present disclosure, the ridge portions 5B refer to, for example, the portions from the lowest part to the tip of the uneven shape provided on the surface of the surface protection layer 5, and the core portion 5A refers to the portion of the surface protective layer 5 excluding the ridge portions 5B.

For example, as shown in Fig. 3, the ridge portions 5B may each be curved, with at least part of them being adjacent to each other in the width direction. In an area where at least part of the ridge portions 5B are adjacent to each other in the width direction, a cross section of the surface protective layer 5 taken along the direction parallel to this width direction and parallel to the thickness direction of the surface protective layer 5 has a corrugated shape, such as a sinusoidal waveform, as shown in Fig. 2, in the portion where the uneven structure is formed.

The uneven structure of the surface protection layer 5 has a protruding peak height Rpk of less than 3.5 μm. The expression protruding peak height Rpk refers to the parameter of the surface conditions defined in JIS B 0671-2:2002. The protruding peak height Rpk is preferred to be 3.0 μm or less, and is more preferred to be 2.8 μm or less. A decorative sheet with an increased protruding peak height Rpk can provide a user with a rough feel when the user touches the surface of the surface protective layer, e.g., when they slide their fingers over the surface of the surface protective layer.

The protruding peak height Rpk is preferred to be 0.5 μm or more, more preferred to be 0.8 μm or more, and even more preferred to be 1.0 μm or more. A decorative sheet with a decreased protruding peak height Rpk can cause high friction when the user touches the surface of the surface protective layer, e.g., when they slide their fingers over the surface of the surface protective layer.

The uneven structure of the surface protective layer 5 may have an average length RSm of roughness curve elements, which is preferred to be 800 μm or less, more preferred to be 550 μm or less, even more preferred to be 350 μm or less, still more preferred to be 320 μm or less, and still more preferred to be 300 μm or less. The expression average length RSm of roughness curve elements refers to the parameter of the surface conditions defined in JIS B 0601:2013. In order to provide a user with a smooth feel when the user touches the surface of the surface protective layer, e.g., when they slide their fingers over the surface of the surface protective layer, the average length RSm of roughness curve elements is preferred to be in the above range.

The average length RSm is preferred to be 10 μm or more, more preferred to be 50 μm or more, and even more preferred to be 80 μm or more. It is difficult to produce a structure in which the average length RSm is small and the protruding peak height Rpk is relatively large.

In the absorption spectrum obtained from Fourier infrared spectrometry of the surface protective layer 5, the ratio $I_{1095}/I_{1725}$, that is the ratio of the maximum value $I_{1095}$ in the wavenumber range of 1085 to 1105 cm$^{-1}$ to the maximum value $I_{1725}$ in the wavenumber range of 1715 to 1735 cm$^{-1}$, is 0.65 or more. The surface protective layer 5 with a low gloss has the ratio $I_{1095}/I_{1725}$ that is within the above range.

The ratio $I_{1095}/I_{1725}$ is more preferred to be 3.5 or less, and even more preferred to be 2.7 or less. Surface protective layers 5 with a large ratio $I_{1095}/I_{1725}$ tend to have low scratch resistance.

Fourier infrared spectrometry will be described.

Infrared light with a wavelength in the range of 2.5 μm to 25 μm can alter the vibrational or rotational states of molecules. The energy required for altering the vibrational or rotational states differs depending on the molecular structures. This is used in infrared spectrometry which is a measurement method of obtaining information related to chemical structures or states of materials.

For example, measurements are performed as follows in Fourier infrared spectrometry. First, light from a light source is allowed to be obliquely incident on a semi-transmissive mirror to split the light into two light fluxes of transmitted light and reflected light. The light flux transmitted through the semi-transmissive mirror is reflected by a fixed mirror and is allowed to be obliquely incident again on the semi-transmissive mirror. The light flux reflected by the semi-transmissive mirror is reflected by a movable mirror and is allowed to be obliquely incident again on the semi-transmissive mirror. The light flux reflected by the semi-transmissive mirror in the reflected light from the fixed mirror is combined with the light flux transmitted through the semi-transmissive mirror in the reflected light from the movable mirror to produce interference waves. While changing the distance from the semi-transmissive mirror to the movable mirror, the interference waves are applied to a sample and, at the same time, the intensity of light transmitted through the sample is measured. The intensity data thus obtained is separated into intensities of individual wavenumber components by calculation (Fourier transformation) to obtain a transmittance spectrum.

In the Fourier infrared spectrometry used here, instead of measuring the transmitted light intensity in the above-mentioned Fourier infrared spectrometry, the reflected light intensity is measured using the following total reflection measurement method (ATR method).

In Fourier transform infrared spectrometry using the ATR method, the interference waves are allowed to be incident on a measurement prism which is brought into contact with the surface of a sample, instead of allowing the interference waves to be directly incident on the sample. The interference waves are allowed to be incident on the measurement prism such that total reflection may occur at the interface between the prism and the sample. In this way, evanescent waves penetrate into the region of the sample near the interface, and light having a specific wavenumber component is absorbed by molecules in this region. In the Fourier transform infrared spectrometry using the ATR method, the intensity of reflected light is measured, instead of measuring the intensity of transmitted light. After that, the intensity data thus obtained is separated into intensities of individual wavenumber components by calculation (Fourier transformation) to obtain an ATR spectrum.

The penetration depth of the evanescent waves increases as the wavelength becomes longer. Therefore, the baseline of an ATR spectrum, with the horizontal axis representing wavelength and the vertical axis representing reflected light intensity (or reflectance), slopes downward to the right. The penetration depth of the evanescent waves is also influenced by the incidence angle of the interference waves on the interface, or the refractive indices of the prism and the sample. Therefore, the ATR spectrum is corrected by the reciprocal of the wavelength, etc. By performing such a correction, a spectrum having a peak intensity ratio similar to that of the above transmittance spectrum can be obtained. By transforming this spectrum, an absorption spectrum, with the horizontal axis representing wavenumber and the vertical axis representing absorbance, can be obtained.

The penetration depth of the evanescent waves, which is small, can be adjusted by the incidence angle of the interference waves or the refractive index of the prism. Thus, according to the Fourier transform infrared spectrometry using the ATR method, the baseline of the object to be measured is prevented from becoming noise even when the object is a thin layer. Also, according to the Fourier transform infrared spectrometry using the ATR method, non-destructive measurement can be performed if only the object to be measured is exposed on the surface of the sample.

As described above, in the absorption spectrum obtained from the Fourier infrared spectrometry of the surface protective layer 5, the ratio $I_{1095}/I_{1725}$ is in the predetermined range. The maximum value $I_{1095}$ in the wavenumber range of 1085 to 1105 $cm^{-1}$ is a value related to the number of ether bonds contained in the surface protective layer 5. Also, the maximum value $I_{1725}$ in the wavenumber range of 1715 to 1735 $cm^{-1}$ is a value related to the number of ester bonds. Accordingly, the ratio $I_{1095}/I_{1725}$ corresponds to the ratio of the number of ether bonds and the number of functional groups in the acrylate contained in the ionizing radioactive resin of the surface protective layer coating liquid described later.

The thickness of the surface protective layer 5 is preferred to be 2 $\mu m$ or more and 15 $\mu m$ or less, more preferred to be 2 $\mu m$ or more and less than 10 $\mu m$, and even more preferred to be 2 $\mu m$ or more and less than 8 $\mu m$. If the thickness of the surface protective layer 5 is decreased, it may become difficult to increase the protruding peak height Rpk or the average length RSm. If the thickness of the surface protective layer 5 is increased, the protruding peak height Rpk or the average length RSm tends to increase.

The thickness of the surface protective layer 5 corresponds to the thickness of a layer having an apparent area and volume equal to those of the surface protective layer 5 and having a flat surface. The thickness of the surface protective layer 5 can be calculated, for example, from the following method. First, an image of a cross section is captured, which is taken along the direction parallel to the thickness direction of the surface protective layer 5 and perpendicular to the length direction of the ridge portions 5B. Next, the dimension of the surface protective layer 5 in the width direction of the ridge portions 5B and the area of the cross section of the surface protective layer 5 are calculated from the image of the cross section. The thickness of the surface protective layer 5 is a value obtained by dividing the area by the dimension. If the surface protective layer coating liquid described later does not contain a solvent, the thickness of the coating film formed of the surface protective layer coating liquid may be equal to the thickness of the surface protective layer 5.

The surface protective layer 5 is preferred to have a gloss of 20.0 or less, more preferably less than 10.0, and even more preferably 8.0 or less. The gloss refers to a measurement value measured at an incidence angle of 60 degrees using a gloss meter conforming to JIS Z 8741:1997.

<2> Method for preparing decorative sheet

For example, the decorative sheet 1 can be prepared using the following method. To simplify, description related to the pattern layer 3, transparent resin layer 4, primer layer 6, adhesive layer 7, and concealing layer 8 is omitted.

First, a coating film comprising a surface protective layer coating liquid is formed on one side of the primary film layer 2. This coating film can be formed using, for example, various printing methods such as offset printing, screen printing, electrostatic printing, and inkjet printing, and various coating methods such as roll coating, knife coating, microgravure coating, and die coating.

The surface protective layer coating liquid contains an ionizing radiation curable resin. The term ionizing radiation refers to charged particle beams such as electron beams. The ionizing radiation curable resin can be cured by ionizing radiation irradiation. The ionizing radiation curable resin can also be cured by UV irradiation. The ionizing radiation curable resin used here can be cured by irradiation of light having a wavelength of 200 nm or less, while having a large absorption coefficient for this light.

In the surface protective layer coating liquid, when the total solid content is 100 parts by mass, the mass of the ionizing radiation curable resin is preferred to be 60 parts by mass or more, more preferred to be 70 parts by mass or more, and even more preferred to be 80 parts by mass or more. The ionizing radiation curable resin may be any known resin, such as various monomers or commercially available oligomers, examples of which include (meth)acrylic resins, silicone resins, polyester resins, urethane resins, amide resins, and epoxy resins. The ionizing radiation curable resin may be either an aqueous resin or non-aqueous (organic solvent-based) resin.

The ionizing radiation curable resin is preferred to contain an acrylate as a main component. The main component of the ionizing radiation curable resin refers to the component contained being 60 parts by mass or more when the solid content of the ionizing radiation curable resin is 100 parts by mass. The ionizing radiation curable resin is preferred to contain 70 parts by mass or more of an acrylate, and more preferably 80 parts by mass or more.

The acrylate is preferred to be a bifunctional or higher acrylate, and is more preferred to be a trifunctional or higher acrylate. From the perspective of obtaining a surface protective layer 5 having excellent scratch resistance, the acrylate is preferred to be a trifunctional or higher acrylate. There is no upper limit to the number of functional groups of the acrylate, but for example, it may be six or less.

The acrylate is preferred to contain a repeating structure. For example, the repeating structure may be any of an ethylene oxide (EO) structure, propylene oxide (PO) structure, and ε-caprolactone (CL) structure. It is preferred that the repeating structure is an ethylene oxide or propylene oxide structure. In the trifunctional or higher acrylate containing a repeating structure, the repeating structure can be present between the acryloyl group and the methylol group in an open ring state.

The number of repeat units of the repeating structure is preferred to be three or more. If an acrylate with a large number of repeat units is used, the cured film is likely to expand in the in-plane direction in the second irradiation step described later, and therefore wrinkles corresponding to the ridge portions 5B are more likely to appear on the surface of the coating film. However, if the number of repeat units is excessively large, the crosslink density may be lowered and the scratch resistance of the surface protective layer may be deteriorated.

Examples of the trifunctional acrylate containing a repeating structure include an EO-, PO- or CL-modified trimethylolpropane triacrylate, glycerin triacrylate, isocyanurate triacrylate, and pentaerythritol triacrylate. In the trifunctional acrylate containing a repeating structure, the number of repeat units of the repeating structure is preferred to be 3 or more and 30 or less, and more preferred to be 3 or more and 20 or less.

A tetrafunctional acrylate containing a repeating structure may be, for example, an EO-, PO- or CL-modified pentaerythritol tetraacrylate. In the tetrafunctional acrylate containing a repeating structure, the number of repeat units of the repeating structure is preferred to be 12 or more, more preferred to be 12 or more and 50 or less, and even more preferred to be 20 or more and 50 or less.

The number of repeat units of the repeating structure can be analyzed using an MALDI-TOF-MS analysis. The ionizing radiation curable resin may have a molecular weight distribution. If there is a molecular weight distribution, the number of repeat units is taken to be the number of repeat units corresponding to the molecular weight having the most intense peak in the MALDI-TOF-MS mass spectrum.

As described above, the ionizing radiation curable resin is preferred to contain an acrylate as a main component. The acrylate may comprise the acrylate described above. Alternatively, the acrylate may be constituted of the acrylate described above (hereinafter referred to as first acrylate) and a second acrylate different from the first acrylate. In this case, the mixing ratio of the first and second acrylates may be, for example, a mass ratio in the range of 90:10 to 20:80. For example, the second acrylate may be an acrylate with 1 to 6 functional groups.

According to an example, the acrylate may be constituted of a first acrylate containing a repeating structure and a second acrylate with 1 to 6 functional groups. In this example, the repeating structure of the first acrylate is any of an ethylene oxide structure, propylene oxide structure, and ε-caprolactone structure, and the number of repeat units of the repeating structure is three or more.

The second acrylate is preferred to contain no repeating structure. Specifically, the second acrylate is preferred to be an acrylate with 1 to 6 functional groups containing no repeating structure. More specifically, the second acrylate is preferred to contain none of the ethylene oxide repeating structure, propylene oxide repeating structure, and ε-caprolactone repeating structure.

Examples of the second acrylate include trimethylolpropane triacrylate, pentaerythritol tetraacrylate, dipentaerythritol pentaacrylate, and dipentaerythritol hexaacrylate.

Using the second acrylate in addition to the first acrylate, the protruding peak height Rpk tends to become smaller, and the average length RSm of roughness curve elements tends to become larger. This can lead to increase of gloss of the surface protective layer 5 to increase gloss variation, and increase of thickness of the surface protective layer 5 to increase thickness variation.

The surface protective layer coating liquid is preferred to further contain particles. If the surface protective layer coating liquid contains particles, wrinkles can more uniformly appear on the surface of the coating film in the second irradiation step.

Examples of the particles include particles of organic materials such as polyethylene (PE) wax, polypropylene (PP) wax, and resin beads, and particles of inorganic materials such as silica, glass, alumina, titania, zirconia, calcium carbonate, and barium sulfate.

The average particle size (D50) is preferred to be 10 μm or less. The average particle size (D50) is more preferred to be 1 μm or more and 8 μm or less, and even more preferred to be 2 μm or more and 6 μm or less. If particles with a large size are used, particles are likely to shed from the surface protective layer 5, and it may become difficult to achieve high scratch resistance. If particles with a small size are used, the effect of uniformly producing wrinkles may be small.

The average particle size (D50) refers to a median diameter (D50) measured using a laser diffraction/scattering particle size analyzer. If the surface protective layer coating liquid contains particles, the surface protective layer 5 obtained from this coating liquid also contains particles. In order to obtain the average particle size of the particles contained in the surface protective layer 5, the diameters of a plurality of particles are actually measured, while observing a cross section of the layer, and the measured diameters are averaged. The value obtained in this way is substantially the same as the median diameter (D50) measured using a laser diffraction/scattering particle size analyzer. Therefore, the above range of the average particle size can also be interpreted as the range of average particle size of the particles contained in the surface protective layer 5.

The amount of particles added is preferred to be 0.5 parts by mass or more and 10 parts by mass or less, more preferred to be 2 parts by mass or more and 8 parts by mass or less, and even more preferred to be 2 parts by mass or more and 6 parts by mass or less, relative to 100 parts by mass of the ionizing radiation curable resin. If the amount of particles is in the above range, an especially high effect of uniformly producing wrinkles can be expected.

The surface protective layer coating liquid can further contain a solvent and additives such as an antibacterial agent and an antifungal agent for improving the functionality of the final product. The surface protective layer coating liquid can further contain other additives such as a UV absorber and a photostabilizer. As the UV absorber, for example, a benzotriazole-based, benzoate-based, benzophenone-based, or triazine-based UV absorber, etc. can be used. As the photostabilizer, for example, a hindered amine-based photostabilizer, etc. can be used. According to the method described here, a surface protective layer 5 having a low gloss can be formed without using a matting agent (matting additive).

The surface protective layer coating liquid is preferred to further contain a photoinitiator. Examples of the photoinitiator include, although not especially limited, benzophenone-based, acetophenone-based, benzoin ether-based, and thioxanthone-based photoinitiators.

The amount of the initiator added is preferred to be 0.1 parts by mass or more and 10 parts by mass or less, more preferred to be 0.25 parts by mass or more and 8 parts by mass or less, and even more preferred to be 0.5 parts by mass or more and 6 parts by mass or less, relative to 100 parts by mass of the ionizing radiation curable resin. If the amount of the initiator is small, the effect of the first irradiation step described later may not be evident. If the amount of the initiator is excessively large, the coating film may be completely cured in the first irradiation step, and wrinkles are not necessarily formed in the second irradiation step that follows.

After forming the coating film of the surface protective layer coating liquid, a first irradiation step is preferred to be performed. In the first irradiation step, the coating film is irradiated with light emitted at a wavelength of approximately 200 nm or more and 400 nm or less (hereinafter referred to as first irradiation light). Thus, the coating film is partially-cured. By partially-curing the coating film by performing the first irradiation step, the wrinkled uneven structure (texture) appearing due to the second irradiation step described later can be stably mass-produced. Alternatively, the irradiation conditions in the first irradiation step can be appropriately determined, for adjustment of the uneven structure, or adjustment of the depth of the uneven structure in particular.

The light source used in the first irradiation step can be selected from, for example, a high-pressure mercury lamp, metal halide lamp, and single-wavelength LED lamp emitting light with a wavelength of 200 nm or more and 400 nm or less.

Integrated light intensity in the first irradiation step is preferred to be 2 mJ/cm$^2$ or more and 100 mJ/cm$^2$ or less, more preferred to be 10 mJ/cm$^2$ or more and 80 mJ/cm$^2$ or less, and even more preferred to be 20 mJ/cm$^2$ or more and 60 mJ/cm$^2$ or less. If the integrated light intensity is decreased, the effect of the first irradiation step described above is not necessarily achieved. If the integrated light intensity is excessively increased, the coating film may be completely cured, and wrinkles are not necessarily formed in the second irradiation step that follows.

Next, a second irradiation step is performed. In the second irradiation step, the coating film is irradiated with light having a wavelength of 200 nm or less (hereinafter referred to as second irradiation light). The ionizing radiation curable resin contained in the surface protective layer coating liquid has a large absorption coefficient for the second irradiation light. For this reason, the second irradiation light incident on the coating film can only reach the depth of several tens to several hundreds of nm from the outermost surface of the film. Therefore, in the second irradiation step, the crosslinking reaction proceeds in the surface region of the coating film to form an extremely thin cured film, while in other regions, crosslinking reaction does not proceed and the coating film remains partially-cured.

The coating film that has undergone the second irradiation step has wrinkles on the surface corresponding to the ridge portions 5B. The present inventors consider the reason why the wrinkles appear on the surface of the coating film due to the second irradiation step to be as follows.

As described above, the second irradiation light can only reach the depth of several tens to several hundreds of nm from the outermost surface of the coating film. Specifically, the crosslinking reaction of the ionizing radiation curable resin due to application of the second irradiation light may occur only on the surface of the coating film. The monomers and the like that are present on the surface of the coating film may be crosslinked via their functional groups due to application of the second irradiation light to form a cured film; however, not all the functional groups are necessarily used for crosslinking the monomers present on the surface of the coating film. In other words, non-crosslinking functional groups can remain on the cured film.

The second irradiation light may not reach the monomers that are present at positions away from the surface of the coating film, and therefore no crosslinking reaction may occur to them. However, part of the monomers away from the surface of the coating film may migrate to the cured film where they may undergo crosslinking reaction. In this way, the number of molecules involved in the crosslinking reaction may increase.

Increase in the number of molecules involved in the crosslinking reaction on the surface of the coating film may lead to increase in volume of the cured film. Since the crosslinking reaction occurs only on the surface of the coating film, the cured film cannot increase the volume in the thickness direction, but may expand in the in-plane direction. As a result, wrinkles may be produced on the surface of the coating film.

The second irradiation light can be extracted from excimer VUV (vacuum ultra violet) light. The excimer VUV light can be produced from a lamp that uses a noble gas or a noble gas halide compound. When electrons having high energy are externally applied to a lamp in which a noble gas or a gas of a noble gas halide compound is sealed, a large quantity of discharge plasma (dielectric barrier discharge) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The wavelength (center wavelength) of light emitted from the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy or the difference between the wavelength and the binding energy of the organics, the light source to be used is preferred to be a xenon lamp emitting excimer light with a center wavelength of 172 nm. Also, considering the cost of maintaining the equipment, availability of materials, etc., a xenon lamp is preferred to be used as a light source.

The second irradiation step is performed under an atmosphere in which the oxygen concentration is low. Oxygen has a large absorption coefficient for light of 200 nm or less. Accordingly, for example, the second irradiation step is preferred to be performed under a nitrogen gas atmosphere. The oxygen concentration in the gas phase in the second irradiation step, i.e., the residual oxygen concentration in the reaction atmosphere, is preferred to be 2,000 ppm or less, and more preferred to be 1,000 ppm or less.

Furthermore, oxygen in the atmosphere inhibits radical polymerization. Therefore, the residual oxygen concentration in the reaction atmosphere affects the formation of wrinkles on the surface of the coating film. Therefore, if the residual oxygen concentration in the reaction atmosphere is changed, the surface conditions of the surface protective layer 5 may also change.

Integrated light intensity in the second irradiation step is preferred to be 0.5 mJ/cm$^2$ or more and 200 mJ/cm$^2$ or less, more preferred to be 1 mJ/cm$^2$ or more and 100 mJ/cm$^2$ or less, and even more preferred to be 3 mJ/cm$^2$ or more and 50 mJ/cm$^2$ or less. If the integrated light intensity is decreased, expansion of the cured film in the in-plane direction may become small. If the integrated light intensity is excessively increased, the surface conditions of the coating film may be deteriorated.

After completing the second irradiation step, a third irradiation step is performed. In the third irradiation step, the coating film is irradiated with a third radiation or irradiation light to cure the entire coating film. Thus, a surface protective layer 5 is obtained.

The third radiation or irradiation light is ionizing radiation such as electron beams, or UV light having a longer wavelength compared to the second irradiation light.

If the third radiation or irradiation light is UV light, the integrated light intensity is preferred to be 10 mJ/cm$^2$ or more and 500 mJ/cm$^2$ or less, more preferred to be 50 mJ/cm$^2$ or more and 400 mJ/cm$^2$ or less, and even more preferred to be 100 mJ/cm$^2$ or more and 300 mJ/cm$^2$ or less.

<3> Effects

The decorative sheet 1 described referring to Figs. 1 to 3 includes the surface protective layer 5 having the surface conditions as described above. Such a decorative sheet 1 can provide a user with a smooth feel when the user touches the surface of the surface protective layer 5, e.g., when they slide their fingers over the surface of the surface protective layer 5. Specifically, the user can slide their fingers or the like over the decorative sheet 1 with little friction without feeling the presence of large unevenness.

The decorative sheet 1, which provides the user with a smooth feel, is suitable for modes of use where the user is frequently in direct contact with the sheet or where the user directly comes into contact with the sheet for a long time, e.g., a mode of use in furniture. Articles using the above decorative sheet 1 do not cause discomfort to the user when the user comes into direct contact with them.

The surface protective layer 5 of the decorative sheet 1, which has the surface conditions as described above, can achieve a low gloss even when it does not contain a matting agent (matting additive). Matting agents reduce the oil repellency of layers formed of resin materials, and therefore surface protective layers containing matting agents are easily stained with fingerprints. The surface protective layer 5, which does not contain a matting agent, is less likely to absorb oil, and therefore is less likely to be stained with fingerprints. The surface protective layer 5 having excellent oil repellency is less susceptible to oil stains and adsorption of contaminants. In addition, in the surface protective layer 5 containing no matting agent, particles of the matting agent do not shed when the surface thereof is scratched, and therefore the decorative sheet 1 including such a surface protective layer 5 is less likely to cause gloss changes or scratches.

The reasons why the surface protective layer 5 having the above surface conditions can be obtained through the above method are as follows.

Oxygen in the gas phase not only absorbs short-wavelength UV light, but also inhibits radical polymerization. The effect of oxygen in the gas phase on radical polymerization is greatest in portions of the coating film of the ionizing radiation curable resin adjacent to the gas phase, but the effect decreases as the distance from the surface of the coating film increases. Therefore, in the second irradiation step, the oxygen concentration in the gas phase is changed to change the relationship between the distance from the surface of the coating film and the progress of the crosslinking reaction.

The change of this relationship leads to change in thickness of the cured film produced on the surface of the coating film in the second irradiation step, or change in expansion degree of the cured film in the in-plane direction with the progress of the crosslinking reaction. The thickness of the cured film or the expansion degree of the cured film in the in-plane direction is also affected by the integrated light intensity in the second radiation step. The thickness of the cured film or the expansion degree of the cured film in the in-plane direction affects the surface conditions of the surface protective layer. Furthermore, the thickness of the coating film affects the formation of wrinkles.

Accordingly, a surface protective layer having desired surface conditions can be obtained by appropriately determining, for example, the composition of the ionizing radiation curable resin, the thickness of the coating film, the oxygen concentration in the gas phase in the second irradiation step, and the integrated light intensity in the second irradiation step.

Examples

Examples of the present invention will be described below.

<Example 1>

The decorative sheet 1 described referring to Figs. 1 to 3 was prepared using the following method. In the present example, the transparent resin layer 4, primer layer 6, adhesive layer 7, and concealing layer 8 were omitted.

First, impregnated paper having a basis weight of $50 \text{ g/m}^2$ (GFR-506, manufactured by Kohjin Co., Ltd.) was used as the primary film layer 2. On one side of the primary film layer 2, a pattern layer 3 was formed using oily nitrocellulose resin-based gravure printing inks (various colors of PCNT (PCRNT) manufactured by Toyo Ink Co., Ltd.).

Next, a surface protective layer coating liquid was applied to the pattern layer 3. The surface protective layer coating liquid was prepared by adding the following particles and initiator to the following ionizing radiation curable resin.

Ionizing radiation curable resin

Type: Ethylene glycol diacrylate (9 moles of EO added)
Product name: Light Acrylate 9EG-A (manufactured by Kyoeisha Chemical Co., Ltd.)
Formulation: 100 parts by mass

Particles

Product Name: SYLYSIA 250N (manufactured by Fuji Silysia Chemical Ltd.)
Particle size: 5 μm
Formulation: 2 parts by mass

Initiator

Product name: OMNIRAD 184 (manufactured by IGM Resins B.V.)
Formulation: 1 part by mass

A coating film of the surface protective layer coating liquid was formed with a thickness of 5 μm.

After that, the first irradiation step was performed. Specifically, using a high-pressure mercury lamp emitting UV light having a main wavelength of 365 nm, the UV light was applied, in the atmosphere, to the surface of the coating film formed of the surface protective layer coating liquid, so that the integrated light intensity would be 100 mJ/cm$^2$. Thus, the coating film was partially-cured.

Next, the second irradiation step was performed. Specifically, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 50 mJ/cm$^2$. Thus, wrinkles were produced on the surface of the coating film.

Finally, the third irradiation step was performed. Specifically, the coating film was irradiated with ionizing radiation and the entirety of the coating film was cured to thereby form a surface protective layer 5.

In this way, a decorative sheet 1 was obtained.

<Example 2>

A decorative sheet 1 was prepared in a manner similar to Example 1, except for the following points. That is, in the present example, the following ionizing radiation curable resin was used.

Ionizing radiation curable resin

Type: Trimethylolpropane EO-modified triacrylate (6 moles of EO added)
Product name: Miramer M3160 (manufactured by Miwon)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 50 mJ/cm$^2$.

<Example 3>

A decorative sheet 1 was prepared in a manner similar to Example 1, except for the following points. That is, in the present example, the following ionizing radiation curable resin was used.

Ionizing radiation curable resin

Type: Trimethylolpropane EO-modified triacrylate (15 moles of EO added)
Product name: SR9035 (manufactured by Sartomer)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 50 mJ/cm$^2$.

<Example 4>

A decorative sheet 1 was prepared in a manner similar to Example 1, except for the following points. That is, in the present example, the following ionizing radiation curable resin was used.

Ionizing radiation curable resin

Type: Trimethylolpropane EO-modified triacrylate (3 moles of EO added)
Product name: Miramer M3130 (manufactured by Miwon)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 100 mJ/cm$^2$.

<Example 5>

A decorative sheet 1 was prepared in a manner similar to Example 1, except for the following points. That is, in the present example, the following ionizing radiation curable resin was used.

Ionizing radiation curable resin

Type: Trimethylolpropane PO-modified triacrylate (6 moles of PO added)
Product name: NK Ester A-TMPT-6PO (manufactured by Shin-Nakamura Chemical Co., Ltd.)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 50 mJ/cm$^2$.

<Example 6>

A decorative sheet 1 was prepared in a manner similar to Example 1, except for the following points. That is, in the present example, the following ionizing radiation curable resin was used.

Ionizing radiation curable resin

Type: Caprolactone-modified tris-(2-acryloxyethyl)isocyanurate (3 moles of caprolactone (CL) added)
Product name: NK Ester A-9300-3CL (manufactured by Shin-Nakamura Chemical Co., Ltd.)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 100 mJ/cm$^2$.

<Example 7>

A decorative sheet 1 was prepared in a manner similar to Example 1, except for the following points. That is, in the present example, the following ionizing radiation curable resin was used. A coating film formed of the surface protective layer coating liquid was formed with a thickness of 1 $\mu$m.

Ionizing radiation curable resin

Type: Trimethylolpropane EO-modified triacrylate (6 moles of EO added)
Product name: Miramer M3160 (manufactured by Miwon)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 10

mJ/cm$^2$.

<Example 8>

A decorative sheet 1 was prepared in a manner similar to Example 1, except for the following points. That is, in the present example, the following ionizing radiation curable resin was used. A coating film formed of the surface protective layer coating liquid was formed with a thickness of 2 μm.

Ionizing radiation curable resin

    Type: Trimethylolpropane EO-modified triacrylate (6 moles of EO added)
    Product name: Miramer M3160 (manufactured by Miwon)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 10 mJ/cm$^2$.

<Example 9>

A decorative sheet 1 was prepared in a manner similar to Example 1, except for the following points. That is, in the present example, the following ionizing radiation curable resin was used. A coating film formed of the surface protective layer coating liquid was formed with a thickness of 9 μm.

Ionizing radiation curable resin

    Type: Trimethylolpropane EO-modified triacrylate (3 moles of EO added)
    Product name: Miramer M3130 (manufactured by Miwon)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 150 mJ/cm$^2$.

<Example 10>

A decorative sheet 1 was prepared in a manner similar to Example 1, except for the following points. That is, in the present example, the following ionizing radiation curable resin was used.

Ionizing radiation curable resin

    Type: Ethoxylated pentaerythritol tetraacrylate (35 moles of EO added)
    Product name: NK Ester ATM-35E (manufactured by Shin-Nakamura Chemical Co., Ltd.)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 50 mJ/cm$^2$.

<Example 11>

A decorative sheet 1 was prepared in a manner similar to Example 1, except for the following points. That is, in the present example, the following ionizing radiation curable resin was used.

Ionizing radiation curable resin

Type: Ethoxylated pentaerythritol tetraacrylate (50 moles of EO added)
In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 50 mJ/cm$^2$.

<Example 12>

A decorative sheet 1 was prepared in a manner similar to Example 1, except for the following points. That is, in the present example, the following ionizing radiation curable resin was used.

Ionizing radiation curable resin

Type: Ethoxylated pentaerythritol tetraacrylate (20 moles of EO added)
In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 100 mJ/cm$^2$.

<Example 13>

A decorative sheet 1 was prepared in a manner similar to Example 1, except for the following points. That is, in the present example, the following ionizing radiation curable resin was used.

Ionizing radiation curable resin

Type: Propoxylated pentaerythritol tetraacrylate (35 moles of PO added)
In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 50 mJ/cm$^2$.

<Example 14>

A decorative sheet 1 was prepared in a manner similar to Example 1, except for the following points. That is, in the present example, the following ionizing radiation curable resin was used.

Ionizing radiation curable resin

Type: Caprolactone-modified pentaerythritol tetraacrylate (20 moles of CL added)
In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 100 mJ/cm$^2$.

<Example 15>

A decorative sheet 1 was prepared in a manner similar to Example 1, except for the following points. That is, in the present example, the following ionizing radiation curable resin was used. A coating film formed of the surface protective layer coating liquid was formed with a thickness of 1 μm.

Ionizing radiation curable resin

Type: Ethoxylated pentaerythritol tetraacrylate (35 moles of EO added)
Product name: NK Ester ATM-35E (manufactured by Shin-Nakamura Chemical Co., Ltd.)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 10 mJ/cm$^2$.

<Example 16>

A decorative sheet 1 was prepared in a manner similar to Example 1, except for the following points. That is, in the present example, the following ionizing radiation curable resin was used. A coating film formed of the surface protective layer coating liquid was formed with a thickness of 2 μm.

Ionizing radiation curable resin

    Type: Ethoxylated pentaerythritol tetraacrylate (35 moles of EO added)
    Product name: NK Ester ATM-35E (manufactured by Shin-Nakamura Chemical Co., Ltd.)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 10 mJ/cm$^2$.

<Example 17>

A decorative sheet 1 was prepared in a manner similar to Example 1, except for the following points. That is, in the present example, the following ionizing radiation curable resin was used. A coating film formed of the surface protective layer coating liquid was formed with a thickness of 9 μm.

Ionizing radiation curable resin

Type: Ethoxylated pentaerythritol tetraacrylate (35 moles of EO added)
In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 150 mJ/cm$^2$.

<Example 18>

A decorative sheet 1 was prepared in a manner similar to Example 1, except for the following points. That is, in the present example, the following ionizing radiation curable resins were used.

Ionizing radiation curable resin 1

    Trimethylolpropane EO-modified triacrylate (6 moles of EO added)
    Product name: Miramer M3160 (manufactured by Miwon)
    Formulation: 60 parts by mass

Ionizing radiation curable resin 2

    Product name: Dipentaerythritol hexaacrylate
    Product name: Miramer M600 (manufactured by Miwon)
    Formulation: 40 parts by mass

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 10 mJ/cm$^2$.

<Example 19>

A decorative sheet 1 was prepared in a manner similar to Example 1, except for the following points. That is, in the present example, the following ionizing radiation curable resins were used.

Ionizing radiation curable resin 1

Trimethylolpropane EO-modified triacrylate (6 moles of EO added)
Product name: Miramer M3160 (manufactured by Miwon)
Formulation: 40 parts by mass

Ionizing radiation curable resin 2

Product name: Dipentaerythritol hexaacrylate
Product name: Miramer M600 (manufactured by Miwon)
Formulation: 60 parts by mass

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 10 mJ/cm$^2$.

<Example 20>

A decorative sheet 1 was prepared in a manner similar to Example 1, except for the following points. That is, in the present example, the following ionizing radiation curable resins were used. The coating film formed of the surface protective layer coating liquid was formed with a thickness of 14 μm.

Ionizing radiation curable resin 1

Trimethylolpropane EO-modified triacrylate (6 moles of EO added)
Product name: Miramer M3160 (manufactured by Miwon)
Formulation: 40 parts by mass

Ionizing radiation curable resin 2

Product name: Dipentaerythritol hexaacrylate
Product name: Miramer M600 (manufactured by Miwon)
Formulation: 60 parts by mass

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 100 mJ/cm$^2$.

<Comparative Example 1>

A decorative sheet was prepared in a manner similar to Example 1, except for the following points. In the present example, a surface protective layer coating liquid was prepared by adding the following particles to the following ionizing radiation curable resin.

Ionizing radiation curable resin

Type: Trimethylolpropane EO-modified triacrylate (6 moles of EO added)
Product name: Miramer M3160 (manufactured by Miwon)
Formulation: 100 parts by mass

Particles

Product Name: SYLYSIA 250N (manufactured by Fuji Silysia Chemical Ltd.)
Particle size: 5 µm
Formulation: 15 parts by mass

The coating film formed of the surface protective layer coating liquid was cured by performing only the third irradiation step, without performing the first and second irradiation steps.

<Comparative Example 2>

A decorative sheet was prepared in a manner similar to Example 1, except for the following points. In the present example, a surface protective layer coating liquid was prepared by adding the following particles to the following ionizing radiation curable resin.

Ionizing radiation curable resin

Type: Ethoxylated pentaerythritol tetraacrylate (35 moles of EO added)
Product name: NK Ester ATM-35E (manufactured by Shin-Nakamura Chemical Co., Ltd.)
Formulation: 100 parts by mass

Particles

Product Name: SYLYSIA 250N (manufactured by Fuji Silysia Chemical Ltd.)
Particle size: 5 µm
Formulation: 15 parts by mass

The coating film formed of the surface protective layer coating liquid was cured by performing only the third irradiation step, without performing the first and second irradiation steps.

<Comparative Example 3>

A decorative sheet was prepared in a manner similar to Example 1, except for the following points. That is, in the present example, the following ionizing radiation curable resin was used. A coating film formed of the surface protective layer coating liquid was formed with a thickness of 10 µm.

Ionizing radiation curable resin

Type: Trimethylolpropane EO-modified triacrylate (6 moles of EO added)
Product name: Miramer M3160 (manufactured by Miwon)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 500 ppm, so that the integrated light intensity would be 150 mJ/cm$^2$.

<Comparative Example 4>

A decorative sheet was prepared in a manner similar to Example 1, except for the following points. That is, in the present example, the following ionizing radiation curable resin was used. A coating film formed of the surface protective layer coating liquid was formed with a thickness of 10 $\mu$m.

Ionizing radiation curable resin

Type: Ethoxylated pentaerythritol tetraacrylate (35 moles of EO added)
Product name: NK Ester ATM-35E (manufactured by Shin-Nakamura Chemical Co., Ltd.)

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 200 ppm, so that the integrated light intensity would be 150 mJ/cm$^2$.

<Comparative Example 5>

A decorative sheet 1 was prepared in a manner similar to Example 1, except for the following points. That is, in the present example, the following ionizing radiation curable resin was used.

Ionizing radiation curable resin 1

Type: Trimethylolpropane EO-modified triacrylate (3 moles of EO added)
Product name: Miramer M3130 (manufactured by Miwon)
Formulation: 20 parts by mass

Ionizing radiation curable resin 2

Product name: Dipentaerythritol hexaacrylate
Product name: Miramer M600 (manufactured by Miwon)
Formulation: 80 parts by mass

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 100 mJ/cm$^2$.

<Comparative Example 6>

A decorative sheet 1 was prepared in a manner similar to Example 1, except for the following points. That is, in the present example, the following ionizing radiation curable resin was used.

Ionizing radiation curable resin 1

Type: Ethoxylated pentaerythritol tetraacrylate (4 moles of EO added)
Product name: NK Ester ATM-4E (manufactured by Shin-Nakamura Chemical Co., Ltd.)
Formulation: 80 parts by mass

Ionizing radiation curable resin 2

Product name: Dipentaerythritol hexaacrylate
Product name: Miramer M600 (manufactured by Miwon)
Formulation: 20 parts by mass

In the second irradiation step, using an Xe excimer lamp, UV light having a wavelength of 172 nm was applied to the surface of the coating film formed of the surface protective layer coating liquid, in a nitrogen gas atmosphere at atmospheric pressure in which the oxygen concentration was 100 ppm, so that the integrated light intensity would be 100 mJ/cm$^2$.

<Evaluation>

Each of the decorative sheets was evaluated as follows.

(1) Gloss

60-degree gloss was measured using a Rhopoint IQ (manufactured by Konica Minolta Co., Ltd.). The 60-degree gloss value in the following Tables 1 to 4 refers to this 60-degree gloss.

(2) Tactile sensation

Tactile sensation was evaluated using the following method.
First, advance preparations were made to ensure that the evaluation criteria were consistent between evaluators. Specifically, 10 standard specimens with different surface conditions were prepared. Next, each of 20 evaluators was asked to run their fingers over the surface of each standard specimen while blindfolded, and then to classify the tactile sensation into one of the following five groups.

First group: Presence of unevenness was barely felt and friction felt small.
Second group: Presence of small unevenness felt or friction felt somewhat large.
Third group: Feel was intermediate between that of the first group and that of the second group.
Fourth group: Presence of large unevenness felt.
Fifth group: Presence of unevenness was not felt but friction felt large.

The above procedure was repeated until the evaluations of each evaluator coincided three or more times in succession and the evaluation results between the evaluators coincided three times in succession.
Next, each of the evaluators was asked to run their fingers over the surface of the surface protective layer of each decorative sheet while blindfolded, and then to classify the tactile sensation into one of the above five groups. Then, this procedure was repeated until the evaluations of each evaluator coincided three or more times in succession and the evaluation results between the evaluators coincided three times in succession. Based on the results, tactile sensation was evaluated according to the following criteria.

AAA (smooth): First group

AA (smooth): Third group
A (smooth): Second group
B (rough or slippery): Fourth or fifth group

(3) Fingerprint resistance

To evaluate fingerprint resistance, fingerprint wipeability was evaluated.

Specifically, first, 60-degree gloss of the surface of each of the decorative sheets was measured and this 60-degree gloss was taken to be an initial gloss. Subsequently, a fingerprint resistance evaluation liquid was adhered to each surface protective layer, and then the fingerprint resistance evaluation liquid adhered to the surface of the decorative sheet was wiped off. A higher fatty acid was used here as the fingerprint resistance evaluation liquid. After that, 60-degree gloss at the portion from which the fingerprint resistance evaluation liquid had been wiped off was measured and this 60-degree gloss was taken to be a gloss after wiping.

A fingerprint wiping rate was calculated from the following formula.

$$\text{Fingerprint wiping rate } (\%) = (\text{gloss after wiping / initial gloss}) \times 100$$

The evaluation criteria were as follows.

AA: Wiping rate was 70% or more and less than 250%.
A: Wiping rate was 50% or more and less than 70%, or 250% or more and less than 300%.
B: Wiping rate was less than 50%, or 300% or more.

(4) Contamination resistance

The contamination A test stipulated in the Japanese Agricultural Standards (JAS) was performed to evaluate contamination resistance. Specifically, lines each having a width of 10 mm were drawn on the surface protective layer of each decorative sheet using blue ink, black quick-drying ink, and red crayon, respectively, and left to stand for 4 hours. After that, the blue ink, black quick-drying ink, and red crayon were wiped off using ethanol-soaked cloth.

The evaluation criteria were as follows.

AA: The colored lines could all be easily wiped off.
A: Part of the colored lines could be wiped off but part of them remained as stains.
B: None of the colored lines could be wiped off.

(5) Scratch resistance

Each decorative sheet was attached to a wood substrate B using a urethane adhesive. After that, a steel wool rubbing test was performed to evaluate scratch resistance. Specifically, with a load of 100 g imposed, steel wool was reciprocated 20 times on the decorative sheet, and scratches and gloss changes caused on the surface of the sheet were visually examined.

The evaluation criteria were as follows.

AA: No scratches or gloss changes were observed on the surface.
A: Slight scratches or gloss changes were observed on the surface.
B: Significant scratches or gloss changes were observed on the surface.

(6) Uniformity of surface conditions

Uniformity of surface conditions in terms of the occurrence of unevenness was visually examined to evaluate mass production stability.

The evaluation criteria were as follows.

AA: Surface conditions were uniform.
A: Surface conditions were substantially uniform.

B: Surface conditions were not uniform.

(7) Fourier infrared spectrometry

For Fourier infrared spectrometry, a Fourier infrared spectrometry device (FT/IR-6300) manufactured by JASCO Corporation, and a single reflection type (incident angle 45°) ATR unit (ATR PRO470-H) with a diamond prism of 2-mmφ sample contact area were used.

The measurement conditions were as follows.

Measurement wavenumber range: $4,000 \text{ cm}^{-1}$ to $400 \text{ cm}^{-1}$
Resolution: $4.0 \text{ cm}^{-1}$
Light source: Standard light source
Detector: TGS
Sample chamber: Standard
Sensitivity (gain): 32x
Aperture diameter: 7.1 mm
Interferometer measurement (scan speed): 2 mm/sec
Filter: 10,000 Hz
Beam splitter: Ge/KBr
Apodization function: Cosine
Zero filling: On

Then, the atmosphere inside the optical system was replaced with nitrogen, and an absorption spectrum was obtained by integrating 160 times. It should be noted that a background measurement had been performed prior to the absorption spectrum measurement of each sample, under the same conditions as those for measuring the sample, except that nothing was brought into contact with the diamond crystal and that the number of times of integration was 320.

The absorption spectrum obtained was subjected to a penetration depth-type ATR correction using a Spectra Manager Version 2 manufactured by JASCO Corporation. Then, a value of the ratio $I_{1095}/I_{1725}$ was calculated.

The results are shown in the following Tables 1 to 4.

[Table 1]

| | | | Ex. 1 | Ex. 2 | Ex. 3 | Ex. 4 | Ex. 5 | Ex. 6 | Ex. 7 |
|---|---|---|---|---|---|---|---|---|---|
| Surface configuration | | | Ridged | Ridged | Ridged | Ridged | Ridged | Ridged | Ridged |
| Surface condition | Rpk (μm) | | 1.9 | 2.6 | 2.4 | 2.5 | 2.7 | 1.8 | 0.3 |
| | RSm (μm) | | 286.5 | 311.5 | 185.6 | 346.3 | 318.5 | 340.5 | 150.0 |
| Ratio $I_{1095}/I_{1725}$ | | | 1.29 | 0.86 | 1.38 | 0.70 | 0.87 | 0.70 | 0.87 |
| Thickness (μm) | | | 5 | 5 | 5 | 5 | 5 | 5 | 1 |
| Acrylic resin 1 | Ratio (mass%) | | 100 | 100 | 100 | 100 | 100 | 100 | 100 |
| | Number of functional groups | | 2 | 3 | 3 | 3 | 3 | 3 | 3 |
| | Repeating structure | Repeating unit | $C_2H_4O$ | $C_2H_4O$ | $C_2H_4O$ | $C_2H_4O$ | $C_3H_6O$ | $C_6H_{10}O_2$ | $C_2H_4O$ |
| | | Number of repeat units | 9 | 6 | 15 | 3 | 6 | 3 | 6 |
| Acrylic resin 2 | Ratio (mass%) | | 0 | 0 | 0 | 0 | 0 | 0 | 0 |
| | Number of functional groups | | - | - | - | - | - | - | - |
| 60-degree gloss | | | 3.1 | 3.0 | 1.8 | 4.3 | 3.1 | 4.8 | 8.0 |
| Tactile sensation (smooth) | | | AA | AA | AAA | A | AA | A | A |
| Fingerprint resistance | | | AA | AA | AA | AA | AA | AA | AA |

(continued)

|  | Ex. 1 | Ex. 2 | Ex. 3 | Ex. 4 | Ex. 5 | Ex. 6 | Ex. 7 |
|---|---|---|---|---|---|---|---|
| Contamination resistance | AA | AA | AA | AA | AA | AA | AA |
| Scratch resistance (against steel) | A | AA | AA | AA | AA | AA | AA |
| Mass production stability (uniformity of conditions) | AA | AA | AA | AA | AA | AA | AA |

[Table 2]

| | | | Ex. 8 | Ex. 9 | Ex. 10 | Ex. 11 | Ex. 12 | Ex. 13 | Ex. 14 |
|---|---|---|---|---|---|---|---|---|---|
| | Surface configuration | | Ridged | Ridged | Ridged | Ridged | Ridged | Ridged | Ridged |
| Surface condition | Rpk ($\mu$m) | | 0.7 | 3.1 | 2.6 | 2.4 | 2.4 | 2.4 | 2.3 |
| | RSm ($\mu$m) | | 186.5 | 298.6 | 308.5 | 196.3 | 344.0 | 296.5 | 348.7 |
| | Ratio $I_{1095}/I_{1725}$ | | 0.87 | 0.87 | 2.02 | 2.65 | 1.37 | 2.09 | 1.37 |
| | Thickness ($\mu$m) | | 2 | 9 | 5 | 5 | 5 | 5 | 5 |
| Acrylic resin 1 | Ratio (mass%) | | 100 | 100 | 100 | 100 | 100 | 100 | 100 |
| | Number of functional groups | | 3 | 3 | 4 | 4 | 4 | 4 | 4 |
| | Repeating structure | Repeating unit | $C_2H_4O$ | $C_2H_4O$ | $C_2H_4O$ | $C_2H_4O$ | $C_2H_4O$ | $C_3H_6O$ | $C_6H_{10}O_2$ |
| | | Number of repeat units | 6 | 3 | 35 | 50 | 20 | 35 | 20 |
| Acrylic resin 2 | Ratio (mass%) | | 0 | 0 | 0 | 0 | 0 | 0 | 0 |
| | Number of functional groups | | - | - | - | - | - | - | - |
| | 60-degree gloss value | | 6.2 | 3.2 | 2.8 | 1.7 | 4.5 | 3.0 | 4.1 |
| | Tactile sensation (smooth) | | AA | A | AA | AAA | A | AA | A |
| | Fingerprint resistance | | AA | AA | AA | AA | AA | AA | AA |
| | Contamination resistance | | AA | AA | AA | AA | AA | AA | AA |
| | Scratch resistance (against steel) | | AA | AA | AA | AA | AA | AA | AA |
| | Mass production stability (uniformity of conditions) | | AA | AA | AA | AA | AA | AA | AA |

[Table 3]

| | | | Ex. 15 | Ex. 16 | Ex. 17 | Ex. 18 | Ex. 19 | Ex. 20 |
|---|---|---|---|---|---|---|---|---|
| | Surface configuration | | Ridged | Ridged | Ridged | Ridged | Ridged | Ridged |
| Surface condition | Rpk ($\mu$m) | | 0.4 | 0.7 | 2.9 | 0.2 | 0.2 | 2.9 |
| | RSm ($\mu$m) | | 152.3 | 202.5 | 321.6 | 534.2 | 784.3 | 230.8 |
| | Ratio $I_{1095}/I_{1725}$ | | 2.02 | 2.02 | 2.02 | 0.73 | 0.67 | 0.67 |
| | Thickness ($\mu$m) | | 1 | 2 | 9 | 5 | 5 | 14 |
| Acrylic resin 1 | Ratio (mass%) | | 100 | 100 | 100 | 60 | 40 | 40 |
| | Number of functional groups | | 4 | 4 | 4 | 3 | 3 | 3 |

(continued)

| | | | Ex. 15 | Ex. 16 | Ex. 17 | Ex. 18 | Ex. 19 | Ex. 20 |
|---|---|---|---|---|---|---|---|---|
| Acrylic resin 2 | Repeating structure | Repeating unit | $C_2H_4O$ | $C_2H_4O$ | $C_2H_4O$ | $C_2H_4O$ | $C_2H_4O$ | $C_2H_4O$ |
| | | Number of repeat units | 35 | 35 | 35 | 6 | 6 | 6 |
| | Ratio (mass%) | | 0 | 0 | 0 | 40 | 60 | 60 |
| | Number of functional groups | | - | - | - | 6 | 6 | 6 |
| 60-degree gloss value | | | 8.0 | 5.8 | 3.6 | 12.0 | 18.0 | 7.2 |
| Tactile sensation (smooth) | | | A | AA | A | A | A | A |
| Fingerprint resistance | | | AA | AA | AA | AA | AA | AA |
| Contamination resistance | | | AA | AA | AA | AA | AA | AA |
| Scratch resistance (against steel) | | | AA | AA | AA | AA | AA | AA |
| Mass production stability (uniformity of conditions) | | | AA | AA | AA | AA | AA | AA |

[Table 4]

| | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Surface configuration | | | Asperities formed due to particles | Asperities formed due to particles | Ridged | Ridged | Ridged | Ridged |
| Surface condition | Rpk ($\mu$m) | | 0.4 | 0.4 | 4.3 | 4.2 | 0.3 | 0.8 |
| | RSm ($\mu$m) | | 1,050.2 | 986.3 | 286.5 | 296.0 | 842.8 | 791.5 |
| Ratio $I_{1095}/I_{1725}$ | | | 1.04 | 2.21 | 0.87 | 0.87 | 0.58 | 0.59 |
| Thickness ($\mu$m) | | | 2 | 5 | 10 | 10 | 5 | 5 |
| Acrylic resin 1 | Ratio (mass%) | | 100 | 100 | 100 | 100 | 20 | 80 |
| | Number of functional groups | | 3 | 4 | 3 | 4 | 3 | 4 |
| | Repeating structure | Repeating unit | $C_2H_4O$ | $C_2H_4O$ | $C_2H_4O$ | $C_2H_4O$ | $C_2H_4O$ | $C_2H_4O$ |
| | | Number of repeat units | 6 | 35 | 6 | 35 | 3 | 4 |
| Acrylic resin 2 | Ratio (mass%) | | 0 | 0 | 0 | 0 | 80 | 20 |
| | Number of functional groups | | - | - | - | - | 6 | 6 |
| 60-degree gloss value | | | 10 | 10 | 2.1 | 2.2 | 24.6 | 25.4 |
| Tactile sensation (smooth) | | | B | B | B | B | A | A |
| Fingerprint resistance | | | B | B | AA | AA | AA | AA |
| Contamination resistance | | | B | B | AA | AA | AA | AA |
| Scratch resistance (against steel) | | | B | B | AA | AA | A | AA |
| Mass production stability (uniformity of conditions) | | | AA | AA | AA | AA | AA | AA |

As shown in Tables 1 to 3, the decorative sheets of Examples 1 to 20 were judged by the evaluators to have a smooth feel. The decorative sheets of Examples 1 to 20 had low gloss and had excellent fingerprint resistance and contamination resistance. The decorative sheets of Examples 1 to 20 also had excellent scratch resistance.

In contrast, as shown in Table 4, the decorative sheets of Comparative Examples 1 and 2 were not judged by the evaluators to have a smooth feel, and were inferior in fingerprint resistance, contamination resistance, and scratch resistance. The decorative sheets of Comparative Examples 3 and 4 had low gloss and had excellent fingerprint resistance, contamination resistance, and scratch resistance; however, were not judged by the evaluators to have a smooth feel. The decorative sheets of Comparative Examples 5 and 6 were judged by the evaluators to have a smooth feel, and had excellent fingerprint resistance, contamination resistance, and scratch resistance; however, could not achieve low gloss.

[Reference Signs List]

| 1 | Decorative sheet |
|---|---|
| 2 | Primary film layer |
| 3 | Pattern layer |
| 4 | Transparent resin layer |
| 5 | Surface protective layer |
| 6 | Primer layer |
| 7 | Adhesive layer |
| 8 | Concealing layer |
| 11 | Decorative material |
| B | Substrate |

**Claims**

1. A decorative sheet comprising a primary film layer and a surface protective layer provided to one side of the primary film layer, wherein

   the surface protective layer has a surface provided with an uneven structure including a plurality of ridge portions each protruding in a ridge-like shape;
   the uneven structure of the surface protective layer has a protruding peak height Rpk of less than 3.5 $\mu$m; and
   an absorption spectrum obtained from Fourier infrared spectrometry of the surface protective layer has a ratio $I_{1095}/I_{1725}$ of 0.65 or more, that is a ratio of a maximum value $I_{1095}$ in a wavenumber range of 1085 to 1105 cm$^{-1}$ to a maximum value $I_{1725}$ in a wavenumber range of 1715 to 1735 cm$^{-1}$.

2. The decorative sheet according to claim 1, wherein the ratio $I_{1095}/I_{1725}$ is 3.5 or less.

3. The decorative sheet according to claim 1 or 2, wherein the protruding peak height Rpk is 0.5 $\mu$m or more.

4. The decorative sheet according to any one of claims 1 to 3, wherein, in the uneven structure of the surface protective layer, an average length RSm of roughness curve elements is 800 $\mu$m or less.

5. The decorative sheet according to claim 4, wherein the average length RSm is 10 $\mu$m or more.

6. The decorative sheet according to any one of claims 1 to 5, wherein the surface protective layer has a thickness of 2 $\mu$m or more and 15 $\mu$m or less.

7. The decorative sheet according to any one of claims 1 to 6, wherein the surface protective layer has a gloss of 20.0 or less.

8. The decorative sheet according to any one of claims 1 to 7, wherein at least part of the plurality of ridge portions are adjacent to each other in a width direction, and in an area where the at least part of the ridge portions are adjacent to each other in the width direction, a cross section taken along a direction parallel to the width direction and parallel to a thickness direction of the surface protective layer has a sinusoidal waveform in a portion where the uneven structure is formed.

9. The decorative sheet according to any one of claims 1 to 8, wherein the surface protective layer contains a cured product of an ionizing radiation curable resin.

10. The decorative sheet according to claim 9, wherein the ionizing radiation curable resin comprises an acrylate containing a repeating structure as a main component, the repeating structure being any of an ethylene oxide structure, a propylene oxide structure, and a ε-caprolactone structure, and the number of repeat units of the repeating structure is three or more.

11. The decorative sheet according to claim 9, wherein

the ionizing radiation curable resin contains an acrylate as a main component; and
the acrylate comprises

a first acrylate containing a repeating structure, the repeating structure being any of an ethylene oxide structure, a propylene oxide structure, and a ε-caprolactone structure, with the number of repeat units of the repeating structure being three or more, and
a second acrylate with 1 to 6 functional groups.

12. A decorative material comprising the decorative sheet according to any one of claims 1 to 11, and a substrate to which the decorative sheet is attached.

FIG.1

FIG.2

FIG.3

## INTERNATIONAL SEARCH REPORT

| International application No. |
|---|
| **PCT/JP2024/001162** |

| A. | CLASSIFICATION OF SUBJECT MATTER |
|---|---|

*B32B 27/00*(2006.01)i; *B32B 27/16*(2006.01)i; *B32B 27/30*(2006.01)i
FI:  B32B27/00 E; B32B27/16; B32B27/30 A

According to International Patent Classification (IPC) or to both national classification and IPC

| B. | FIELDS SEARCHED |
|---|---|

Minimum documentation searched (classification system followed by classification symbols)

B32B1/00-43/00; C08J7/04-7/06; B44C3/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2023/282295 A1 (TOPPAN PRINTING CO., LTD.) 12 January 2023 (2023-01-12) entire text, all drawings | 1-12 |
| A | JP 2022-189544 A (C.I.TAKIRON CORP.) 22 December 2022 (2022-12-22) entire text, all drawings | 1-12 |
| A | JP 2022-154602 A (DAI NIPPON PRINTING CO., LTD.) 13 October 2022 (2022-10-13) entire text, all drawings | 1-12 |
| A | JP 2021-24102 A (C.I.TAKIRON CORP.) 22 February 2021 (2021-02-22) entire text, all drawings | 1-12 |
| A | JP 2019-119138 A (TOPPAN PRINTING CO., LTD.) 22 July 2019 (2019-07-22) entire text, all drawings | 1-12 |
| P, A | JP 2023-132841 A (DAI NIPPON PRINTING CO., LTD.) 22 September 2023 (2023-09-22) entire text, all drawings | 1-12 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/001162**

| | C. DOCUMENTS CONSIDERED TO BE RELEVANT | |
|---|---|---|
| Category* | Citation of document, with indication, where appropriate, of the relevant passages | Relevant to claim No. |
| P, A | WO 2023/249082 A1 (TOPPAN HOLDINGS INC.) 28 December 2023 (2023-12-28)<br>entire text, all drawings | 1-12 |

Form PCT/ISA/210 (second sheet) (July 2022)

**INTERNATIONAL SEARCH REPORT**
Information on patent family members

International application No.

**PCT/JP2024/001162**

| Patent document cited in search report | | | Publication date (day/month/year) | Patent family member(s) | | | Publication date (day/month/year) |
|---|---|---|---|---|---|---|---|
| WO | 2023/282295 | A1 | 12 January 2023 | (Family: none) | | | |
| JP | 2022-189544 | A | 22 December 2022 | (Family: none) | | | |
| JP | 2022-154602 | A | 13 October 2022 | WO entire text, all drawings CN KR | 2022/210538 117083175 10-2023-0164665 | A1 A A | |
| JP | 2021-24102 | A | 22 February 2021 | (Family: none) | | | |
| JP | 2019-119138 | A | 22 July 2019 | EP entire text, all drawings WO CN KR | 3736124 2019/135360 111556805 10-2020-0105831 | A1 A1 A A | |
| JP | 2023-132841 | A | 22 September 2023 | WO entire text, all drawings | 2023/171773 | A1 | |
| WO | 2023/249082 | A1 | 28 December 2023 | (Family: none) | | | |

Form PCT/ISA/210 (patent family annex) (July 2022)

**EP 4 656 378 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A